# EUROPEAN PATENT SPECIFICATION

(11) **EP 0 470 242 B1**
(45) Date of publication and mention of the grant of the patent: **18.10.1995**
(21) Application number: 91906127.5
(22) Date of filing: 21.02.1991
(51) Int. Cl.: B05D 1/24, B05C 11/00

(54) **METHOD FOR FIBER COATING WITH PARTICLES**
VERFAHREN ZUR FASERBESCHICHTUNG MIT PARTIKELN
PROCEDE DESTINE A ENROBER DES FIBRES A L'AIDE DE PARTICULES

(30) Priority: 26.02.1990 US 484779
(43) Date of publication of application: 12.02.1992
(73) Proprietor: MICHIGAN STATE UNIVERSITY, East Lansing, Michigan 48824 (US)
(72) Inventor: IYER, Shridhar, Houston, TX 77077 (US); DRZAL, Lawrence, T., Okemos, MI 48864 (US); JAYARAMAN, Krishnamurthy, East Lansing, MI 48823 (US)
(74) Representative: Grünecker, Kinkeldey, Stockmair & Schwanhäusser Anwaltssozietät
(86) International application number: PCT/US91/01217
(87) International publication number: WO 91/12898

(56) References cited:
- SU-A- 1 191 125
- US-A- 3 798 095
- US-A- 3 817 211
- US-A- 4 713 139
- J.D. MUZZY, "Processing of Advanced Thermplastic Composites," in ASME Symposium on Manufacturing Scienic of Composites, published April 1988 p. 27-39.

## Description

The present invention relates to a method and system for coating particles on a fiber in accordance with the generic clauses of claims 1 and 12. The present invention particularly relates to a composite prepreg with either a thermoplastic or thermoset matrix on fibers in a tow which is suitable for use in primary and secondary structural preform methods with significant cost, speed and environmental advantages. The present invention particularly relates to a method and system which uses a vibrating means in a housing to fluidize particles and to coat them on the fibers.

Such a system and method is already known from US-A-3 817 211 which describes a fluidized bed for covering fibers, whereby electrodes are utilized to apply a charge to the individual filaments having a polarity which is opposite the charge on the particles that are contained in the fluidized bed. A plate functioning as an electrode to establish an electrostatic field in the gaseous suspension of particles, is provided on the bottom of the fluidized bed. A blower is connected to the casing of the apparatus in order to improve the fluidization. Furthermore, vibrating means are arranged to ensure that the particles are fluidized.

Document SU-A-1 191 125 discloses an apparatus for fluidizing powder materials by acoustic waves for covering the surface of different articles.

High-speed, low-cost processing methods are required to produce prepreg composite materials for high volume applications with either thermoset or thermoplastic matrices dispersed through a tow of fibers. Conventional processes like hot melt prepregging rely on the creation of a low viscosity matrix phase early in the process which is then forced around and through the fiber tows at high pressure. Wetting of individual fibers at the microscopic level is the ultimate goal. For thermoset materials, dilution in solvents has been relied upon for composite fabrication or if the reaction window is long enough, elevated temperatures are used to lower resin viscosity. Thermoplastic matrices are inherently high in viscosity and elevated temperature and pressure can not always be used. Solution methods are commonly used. Environmental and health concerns as well as the costs associated with using and reclaiming high boiling solvents makes their use with these methods undesirable. Many high performance matrix resins are not soluble in any solvents and they are therefore not capable of being used in high volume applications at the present time.

The key feature to any successful processing method is the ability to place the polymer around the fibers to form the prepreg. A viable processing method should place the polymer in its final position on the fiber surface and should be applicable to any matrix.

### (1) Solution Processing:

This method is used with both thermoset and thermoplastic matrices. Polymer is dissolved in a solvent and the fiber tow is impregnated with the resulting low viscosity solution (Turton, N., and J. McAinsh, U.S. Patent No. 3,785,916). Complete removal of solvent after impregnation is a stringent requirement and is often a difficult step. Methylene chloride, acetone and N-methyl pyrrolidone are widely used as solvents. Epoxies, polyimides, polysulfone, polyphenyl sulfone and polyether sulfone are some of the matrices which have been solution-impregnated.

### (2) Slurry Processing:

Polymer particles are suspended in a liquid carrier and the fiber tow is passed through a slurry tank which contains polymer particles. Polymer particles are trapped within the fiber tow. Taylor (Taylor, G. J., U.S. Patent No. 429,105) outlines a process whereby the particles are suspended in water which is thickened with a material such as polyethylene oxide to increase the viscosity to 0,4- 3 Pa·s (400-3000 cP) at 25°C. O'Connor (O'Connor, J. E., U.S. Patent No. 4,680,224), points out problems with this method which include finding the right concentration of slurry, maintaining the optimum concentration in the resin tank and accumulation of excess resin at the die entrance (where the impregnated tow is consolidated into a tape or flat sheet). The minimum void contents in the processed tape were about 2 to 4%. Another method (Dyksterhouse, R., Dyksterhouse, J.A., U.S. Patent Application 114,362, November 1987) impregnates the fibers in a gelled impregnation bath with plastic flow characteristics, shear-thinning behavior and a polymer binder in which the polymer particles are uniformly suspended. A PEEK-carbon fiber void-free composite was made by impregnating G30-500 carbon fibers in a gelled impregnation bath having a viscosity of 81 Pa s (81000 cP)

### (3) Melt Impregnation:

Direct impregnation of the fiber tow with molten polymer is possible. For thermoset matrices like epoxy, temperature and reaction kinetics allow for a continuous melt impregnation before reaction. For thermoplastics, two approaches have been used: (a) a cross head extruder feeds molten polymer into a die through which the rovings pass (Moyer, R. L., U.S. Patent No. 3,993,726), and, (b) the fibers pass through a molten resin bath fitted with impregnation pins to increase the permeability of the polymer into the tow. The impregnation pins can be heated to decrease viscosity locally to further improve the impregnation process (Cogswell, F. N., et al. U.S. Patent No. 4,559,262). In either case, the force exerted on the fibers e.g. die pressure for the crosshead extruder are extremely high and can cause fiber damage. The resulting prepreg usually lacks tack and drape.

### (4) Film Stacking:

Layers of fiber reinforcement either in the form of unidirectional tows or woven fabrics are stacked with thermoplastic sheets as the matrix material and consolidated under pressure for long times (Lind, D. J., and Coffey, V. J., U.K. Patent 1,485,586). This method is widely used due to the relative ease of manufacture. Disadvantages include high resin content, the uneconomic (labor-intensive) nature of the process and difficulty in impregnating the fiber tow (high pressure forces the fibers together) with the high viscosity matrix material.

### (5) Fiber Co-mingling:

A thermoplastic matrix can be spun into a fine yarn and co-mingled with the reinforcing fiber tow to produce a co-mingled hybrid yarn (Clemans, S. R., et al., Materials Engineering, 105, 27-30 (March 1988)). These hybrid yarns can be consolidated to form composite parts. An advantage of this technique is the drapeability of the hybrid yarn. The high cost involved in producing thermoplastic yarn and weaving it with the reinforcing fibers is a disadvantage.

### (6) Dry Powder Impregnation:

Dry thermoplastic powder is introduced into a fiber tow which is then processed by heating to sinter the powder particles onto the fibers. This technique was first employed by Price (Price, R. V., U.S. Patent No. 3,742,106) who passed glass roving through a bed (either fluidized or loosely packed) of thermoplastic powder. Polypropylene particles with an average diameter of 250 µm (250 microns) were used. The particles stick to the fibers due to electrostatic attraction. The tow is then heated and passed through a die to produce an impregnated tow. The impregnation is macroscopic, i.e. the particles coat clusters of fibers rather than individual fibers leaving unwetted areas and voids. The process is targetted mainly at producing short fiber reinforced thermoplastics. Ganga (Ganga, R. A., "Flexible Composite Material and Process and Apparatus for Producing Same", AT0113 (DPI8176); "Procédé de Fabrication d'Objets Composites Obtenus", FR 2548084-A1, June 1983), fluidized polyamide particles less than 20 µm (20 microns) in size in a fluidization chamber, impregnated glass rovings and covered this with an outer sheath of a second material of lower melting point than the impregnated particles. The second sheath was extruded onto the tow. Muzzy (Muzzy, J.D., ASME Symposium on Manufacturing Science of Composites, p27-39 (April 1988)) recently demonstrated the ability to manufacture prepreg by passing a spread tow through an electrostatic fluidized bed of PEEK powder (50 microns).

Dry powder processes offer the optimum potential for the creation of a high speed, low-cost process if the creation of a void-free composite with controllable volume fractions can be achieved. An ideal process should have the following characteristics:
(i) It should be independent of matrix viscosity. Most high performance thermoset and thermoplastic matrices are either very reactive at the high temperatures necessary to reduce their viscosity or are highly viscous about 10²-10⁴ Pa·s (10³ to 10⁵ Poise) above their softening point (amorphous) or melting temperature (semi-crystalline). A viable dry powder process circumvents this problem by coating fibers individually with the required amount of matrix so that flow of the polymer takes place only over submicron distances between particles rather than centimeter distances from the outside to the inside of the fiber tows.
(ii) It should avoid the use of binders or solvents which have to be evaporated during the latter stages of the processing cycle. This can always be a source of voids which have a deleterious effect on the mechanical properties of the composite.
(iii) The average particle size of the material used is preferably approximately the same as the dimensions of the fiber for optimum impregnation. A significantly larger particle size will cause bridging and restrict impregnation due to physical limitations which results in a non-uniform distribution of resin between the fibers.
(iv) The concentration of powder particles in the "impregnation chamber" where they meet the fibers should be constant and controllable at all times.
(v) The mechanism of adhering the particles to the fibers should be controllable and independent of environmental conditions.
(vi) The resulting prepreg tape should be in a form that is flexible and drapeable so that complex parts can be formed easily.
(vii) The process should require minimal energy use, be free of labor intensive steps, capable of operating at high speeds and be capable of scale-up to large sizes.

Patents which relate to fiber handling which are of general interest are U.S. Patent Nos. 2,244,203 to Kern; 3,017,309 to Crawford; 3,304,593 to Burklund; 4,534,919 to McAliley et al; and 4,714,642 to McAliley et al.

It is therefore an object of the present invention to provide a dry powder process for the uniform coating of fibers with particles of a material which meets all of the criteria previously discussed. Further, it is an object of the present invention to provide a process which is relatively simple and economical. These objects are met by the characterizing features of claims 1 and 12 These and other objects will become increasingly apparent by reference to the following description and the drawings.

Figure 1 is a schematic, front cross-sectional view of the system of the present invention, particularly a spreader 14 for a conveyed tow of fibers 10, a particle coating chamber 17, and a heater 19 for bonding the particles to the fibers 10.

Figure 1A is a cross-section along line 1A-1A of Figure 1 showing the cross-section of a chamber section 17d for aerosolyzing the particles P.

Figure 1B is a cross-section along line 1B-B of coating section 17a of Figure 1.

Figure 1C is a cross-section along line 1C-1C of heater 19 of Figure 1.

Figure 1D is a cross-section along line 1D-1D of spreader 14 of Figure 1 showing the speaker 14a.

Figure 1E is a cross-section along line 1E-1E of of Figure 1 showing the speaker 17b in housing 17c.

Figure 2 is a perspective view of an enlarged view of the spreader 14 illustrated in Figure 1, particularly showing the mounting of the rods 14b relative to the speaker 14a.

Figure 3 is a front cross-sectional view of another type of chamber 30 for aerosolyzing the particles P₁, particularly illustrating the mounting of the chamber 30 in a casing 31. Figure 3A is a cross-section along line 3A-3A of Figure 3.

Figures 4A to 4B are photomicrographs of an impregnated tow of fibers (Figure 4A) and composite formed after heating and consolidation (Figure 4B).

The present invention relates to an improved system for coating particles of a material on a fiber which comprises: chamber means around the fiber for containing the particles to be deposited on the fiber; and vibrating means mounted in the chamber means such that the particles are fluidized and deposited on the fiber when the vibrator means is activated.

The present invention also relates to an improved system for coating particles of a material on a fiber which is to be conveyed through the system which comprises: chamber means around the fiber for containing the particles to be deposited on the fiber; and vibrating means mounted in the chamber means such that the particles are fluidized and deposited on the fiber as the fiber is conveyed through the system when the vibrator means is activated.

Further, the present invention relates to a system for spreading fibers and coating a powder on the fibers of a fiber tow to be conveyed through the system which comprises: feed means for feeding the tow of fibers; spreader means for spreading the tow of fibers from the feed means; chamber means around the tow of fibers for containing the powder to be deposited on the fibers; an acoustic speaker means mounted in the chamber means such that the powder is fluidized and directed at the tow of fibers when the speaker is activated; and take-up means for the coated tow of fibers.

The present invention also relates to a method for coating particles on a fiber which comprises: providing a system for coating particles of a material on a fiber comprising housing means around the fiber for containing the particles to be deposited on the fiber, and vibrating means mounted in the chamber means such that the particles are fluidized and deposited on the fiber when the vibrator means is activated; providing the fiber in the chamber means in the system wherein the fiber is coated with the particles when vibrating means is activated and activating the vibrator means to coat the fiber.

The present invention further relates to a prepreg for a laminate product which comprises a tow of fibers having beads of a thermoplastic polymer along the length of each fiber in the tow of fibers.

The present invention provides a low-cost powder processing method for producing a composite prepreg suitable for use with any preform processing method. Polymer powder particles are preferably acoustically fluidized and dispersed in a large chamber. Fibers are preferably also acoustically separated and then drawn through the chamber into the fluidized powder. Individual fibers are coated with particles uniformly and the particles adhere to the individual fibers in their final position so that heating can fix the particles in place. The resultant preferred prepreg is a flexible, drapeable material which is subsequently processed to produce a void-free, fully densified composite.

The process can be scaled-up and controlled with automated techniques. It can be used with any polymeric, metallic or ceramic matrix that can be produced in a powder form. Prepreg materials have been produced where the volume fractions of fiber controlled to two percent total derivation over a wider range of concentrations. The method has been used for fabricating prepreg specimens widths of 10mm to 50mm.

This invention particularly relates to a low-cost/high speed composite prepreg method. The method produces continuous fiber composite prepreg with fiber volume fractions controllable to within one percent. The method is continuous, requires no solvents, can be used with any fiber-matrix combination and is scalable to any prepreg size. Capital equipment and energy input for the process are low making this a viable low-cost processing method. The method is based on the use of acoustic energy to overcome gravitational forces as opposed to gas flow in conventional fluidization. Agglomeration and channeling of cohesive powders (approximate size < 20 µm (20 microns)) makes their fluidization extremely difficult to accomplish by conventional gas fluidization techniques. The present invention, however,makes it possible to fluidize and entrain particles of any size at any desired concentration.

An acoustic speaker is preferably used to both separate the fiber tows into individual fibers and to entrain small polymer matrix particles in air or any suitable gas, whether reactive (e.g. oxygen) or non-reactive (nitrogen), in a chamber through which the fiber passes. The particles adhere to each fiber filament providing a uniform coating when subjected to heating so that the prepreg can be processed to any degree of consolidation downstream. The resulting prepreg is drapeable and can be used in weaving or preform operations.

The acoustic speakers have preferably a rating of about 8 ohms and 100 watts and a sound level of about 80 to 130 dB. The frequency is preferably between 11.5 to 12 Hz. Essentially any frequency can be used, preferably corresponding to the natural frequency of the coating chamber, including the end closures and the powder. Preferably the frequency can be anywhere in the audio to ultrasonic range and is preferably between 1 to 20,000 Hz which includes the audible range.

A model system consisting of carbon fibers (7.2 microns diameter) and small diameter polyamide powder particles of 9,2 ± 4 µm average diameter and a range of 5 to 15 µm < 20 µm (5 to 15 micron <20 microns)) was used. Acoustic energy was responsible for aerosolization of the particles.

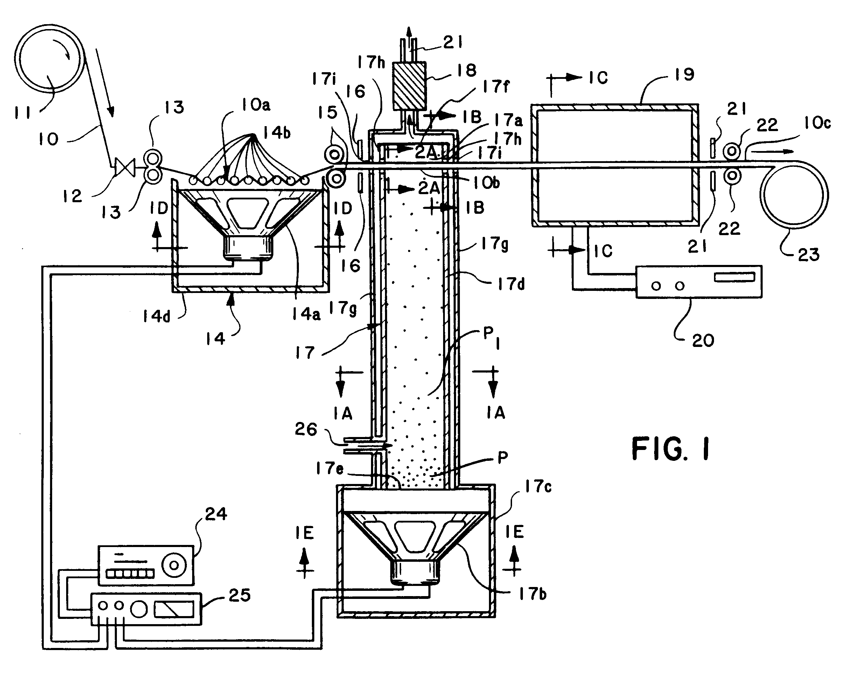

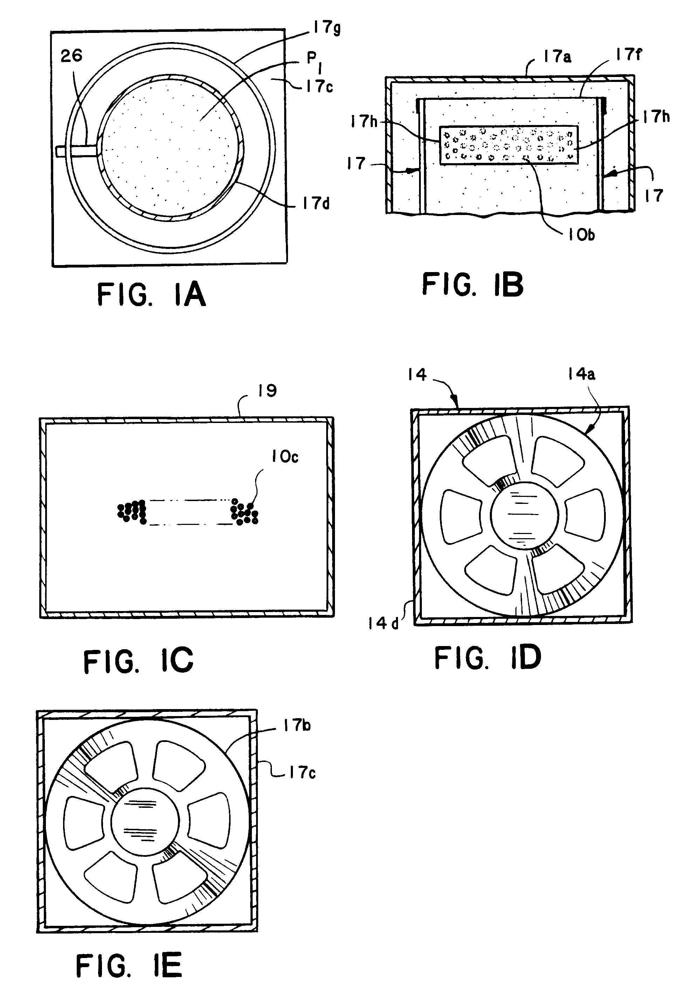

A schematic of the system is shown in Figures 1 and 1A to 1E. A fiber tow 10 was unwound from a spool 11. The tow 10 was passed through a guide ring 12 and between nip rollers 13 before passing over the spreader 14. The spreader 14 has a high sound level (80 to 130 dB) audio speaker 14a to separate the tow 10 into its individual filaments or fibers without damaging the fibers of the tow 10. Nip roller 13 and nip roller 15 maintained a constant slack in the spread tow 10a in the region above the speaker 14a. Circular cross-sectioned rods 14b maintain the separation of the fibers in the spread tow 10a. The tow 10a zig-zags over and under the rods 14b.

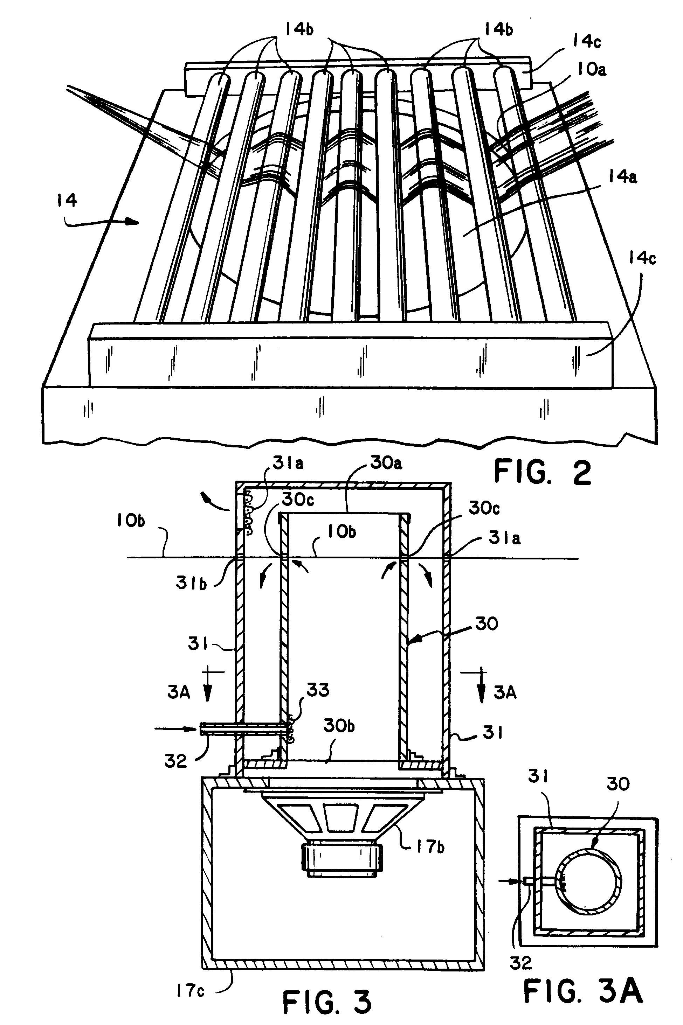

Figure 2 is an enlarged view of the spread tow 10a showing the rods 14b mounted with axis in parallel on spaced apart holders 14c. As can be seen the speaker 14a is mounted adjacent and below the rods 14b.

The width of the spread tow 10a of fibers is controlled by guides 16 and the spread tow 10a is passed through a coating chamber 17 with a coating section 17a where aerosolized particles P₁ impact and coat individual fibers of the spread tow of fibers 10a. The particles P₁ are aerosolized by a second speaker 17b mounted in an enclosed housing 17c on the bottom of chamber 17. Diaphragm 17e made of rubber, separates the speaker 17b from the particles P in chamber 17. Rubber diaphragm 17f provides a closure for chamber 17 at the opposite end.

The diaphragms 17e and 17f, along with housing 17d and the particles in the chamber, have a natural resonance frequency which is preferably matched by the speaker 17b. It has been found that resonance provides constant controllable aerosolization of the particles P₁ in the coating section 17a. The natural frequency of the chamber 17 can be varied as a function of the length and diameter of the chamber 17 as well as the resiliency or lack thereof of the end closures, which are preferably flexible diaphragms 17e and 17f. The weight of the particles P also affect the aerosolization of the particles P₁.

The powder P₁ can be collected and reused. The casing 17g collects the powder which escapes from chamber 17 through openings 17h. Casing 17g has openings 17i which are covered to prevent escape of the powder P₁ to the atmosphere.

The chamber section 17d is provided with a gas inlet 26. The casing 17g is provided with a gas outlet 21 through the filter 18. The gas is preferably dry air or nitrogen although other gases can be used. The gas aids in aerosolizing the powder P₁ in the chamber section 17d and coating section 17a and along with the diaphragms 17e and 17f and speaker 17b. The powder P is aerosolized to P₁ by the speaker 17b.

The impregnated tow 10b passes through a heater 19, controlled by a temperature controller 20 and then through guides 21 and nip roller 22 which controls the width of the prepreg tape 10c before being wound on a takeup drum 23.

The speakers 14a and 17b are separately controlled by a frequency generator 24 and power amplifier 25. It will be realized that the speakers 14a and 17b could have separate generators and amplifiers (not shown).

Figure 3 shows another type of coating chamber 30 for coating the tow of fibers 10b. The chamber 30 is covered by square cross-sectioned casing 31. The casing 31 has a gas vent 31a. The chamber 30 has an inlet 32 for a gas and a diffuser screen 33 to prevent back flow of particles into pipe 32. The chamber 30 has diaphragms 30a and 30b at either end which are vibrated by the speaker 17b. The casing 31 is provided with slots 31b and the chamber 30 is provided with slots 30c for the tow 10b. The speaker 17b is mounted in housing 17c as in Figure 1.

The following examples illustrate the capability of the process:
(i) Example 1 shows that the prepreg tapes made by the method are reproducible even with manual control.
(ii) Example 2 shows that the method can tailormake prepreg tapes with any desired fiber-matrix volume fraction.
(iii) Example 3 was performed with a preliminary version of the method, wherein the coating section was separate from the aerosolizer and connected by a pipe (not shown). The fiber tow was impregnated with particles on a step-by-step basis.
(iv) Example 4 shows prepreg tapes which can be consolidated to make void-free composites. It also shows that the consolidation step has the effect of averaging out local variations in the fiber-matrix volume fractions in the prepreg tape to produce a uniform composite part.

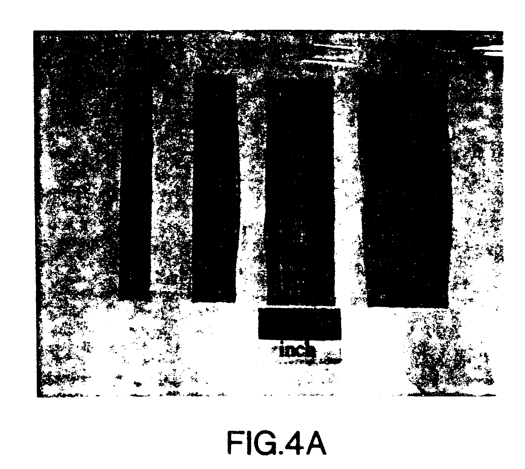

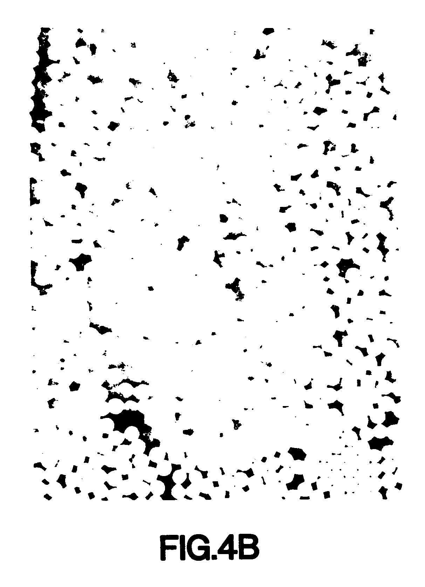

Figures 4A and 4B are photomicrographs taken at two stages in the method. Figure 4A shows a prepreg 10c of fibers. Figure 4B shows that void free consolidation of the prepreg 10c is readily achievable.

### Example 1

A set of six prepregging runs were performed with a preferred version of the process. The materials used were a carbon fiber tow 10 (3000 fibers/tow, Hercules AS4 fibers, Hercules, Inc., Magna, Utah) and a polyamide powder P 9,2 +/- 4 µm ((9.2 +/- 4 microns), Orgasol, made by ATOCHEM Inc., Glen Rock, New Jersey). The carbon fiber tow 10 was unwound from a fiber spool 11 with the help of nip rollers 13. The tow 10 was then spread by the spreader 14 which consisted of a 25,4 cm (10") speaker (8 Ohms, 100 Watts) mounted in a plywood housing 14d. The fiber tow 10 passed over the speaker 14a on top of which were mounted 10 polished steel rods 14b (9,5 mm (3/8" diameter)) spaced 25,4 mm (1") apart. The rods 14b were to hold the spread tow 10a in position once they are spread by the speaker 14a. The spread tow 10a passed through nip rollers 15 and entered the chamber 17. The aerosolizer consisted of a plywood speaker box 17c 0,38 m ((15") speaker 17b, 8 Ohms, 100 Watts) over which a cylindrical plexiglass column 208 mm ((8.2") internal diameter, 0,38 m (15") in length) was mounted. Vibrating rubber diaphragms 30a and 30b were placed on the ends of the chamber 30 and above the speaker box 17c. The aerosolizer was cleaned and packed with 225 grams of powder P at the beginning of the first run. Both the aerosolizer and the spreader 14 were operated at the natural frequency of the respective systems. The tow 10b was impregnated with particles P in the aerosolizer and then entered a heater 0,30 m ((12") length) where the particles sintered and coalesced on the fibers. The resulting prepreg tape was then wound on takeup drum 23. The distance travelled by the fiber tow from the fiber spool 11 to the takeup drum 23 was 65 inches. Table I shows the values of the different variables monitored in the method. The volume fractions were calculated by weighing 0,71 m (28") lengths of the prepreg tapes 10c and comparing the weight of an equivalent length of unimpregnated fiber tow.

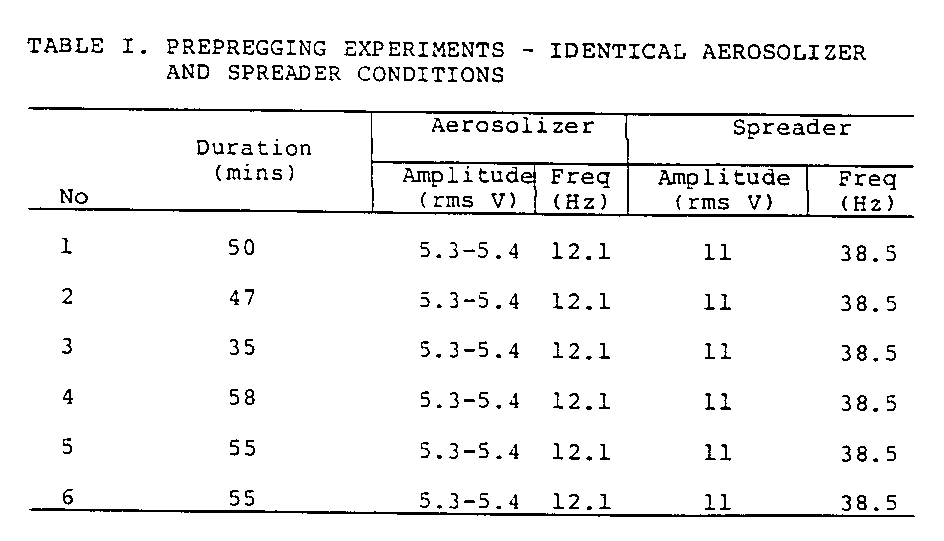

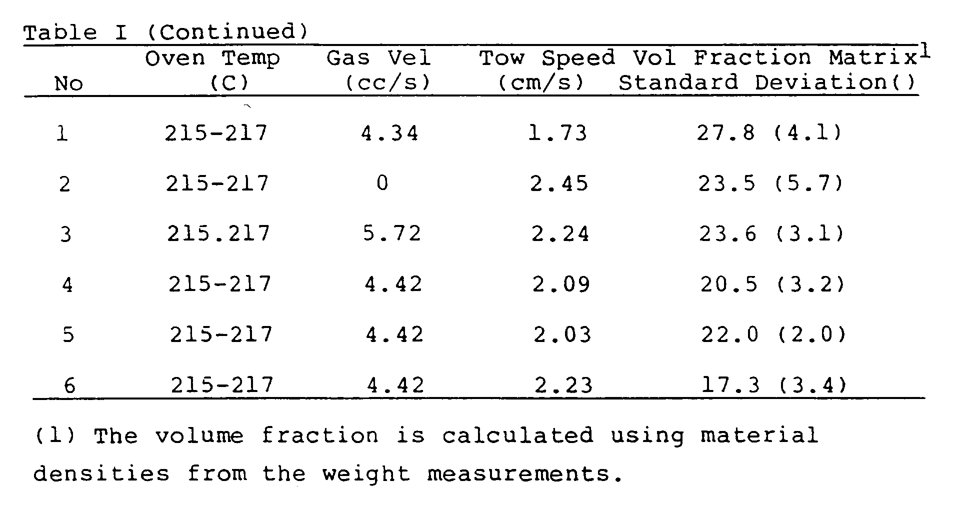

The runs have identical oven temperature, aerosolizer and spreader conditions. Run 1 starts with a clean chamber and the walls get progressively caked with powder to a saturation level beyond which there is no further caking. Consequenty, particle pickup is higher in run 1 as compared with the other five runs. The gas velocity of run 2 is zero and the volume fraction matrix shows a higher standard deviation than the other five runs. This indicates that a gas flow is preferred for optimum particle entrainment. The tow 10 velocities of all the runs were slightly different due to manual speed control of the motors used in the process. Run 6 indicates that the chamber needs to be replenished with powder P. Despite these discrepancies, the average volume fraction matrix was 22.5 with a standard deviation of 3.5. The corresponding numbers are 22.4 and 1.5 if the first and last runs are excluded which is a fairer test.

### Example 2

Table II shows a set of four prepregging runs all performed at different conditions with the same fiber-matrix combination and the same version of the method as in Example 1. The volume fractions attained prove that a judicious combination of aerosolizer conditions and tow velocity can be employed to make a prepreg tape with any desired volume fraction of matrix.

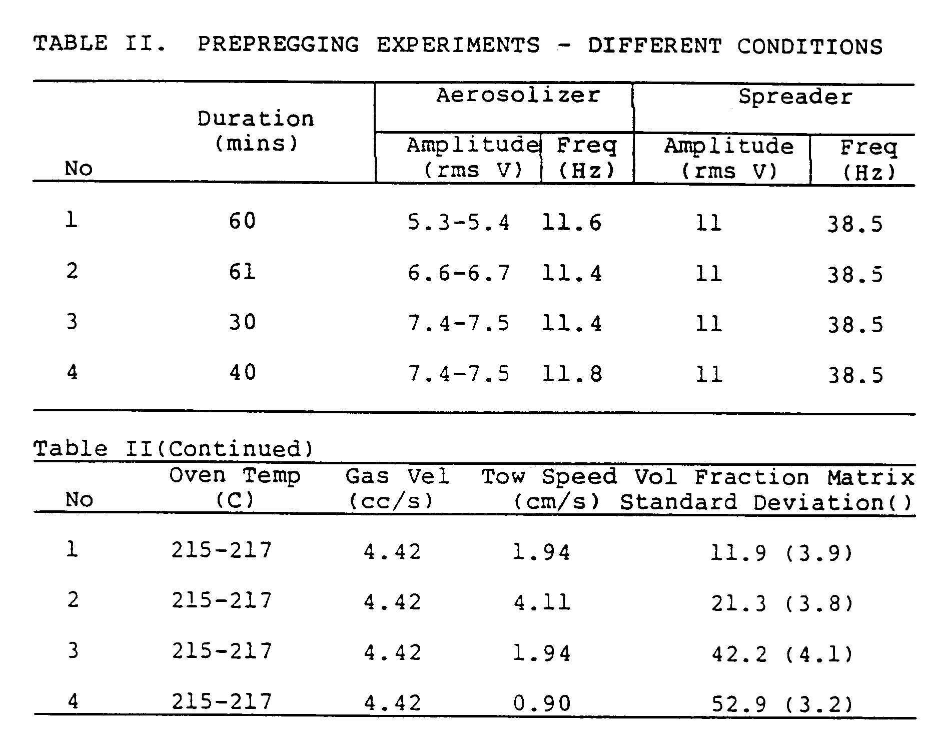

### Example 3

A set of twenty-one prepregging runs were performed with an alternative version of the process in which the fiber tow, after spreading, passed through a separate impregnation chamber which was supplied with entrained particles from the aerosolizer. The aerosolizer with chamber 30 80 mm ((3.15") internal diameter, 165 mm (6.50") speaker, 8 Ohms, 50 Watts) and the spreader 14 165 mm ((6.50") speaker, 8 Ohms, 50 Watts) were powered by the same frequency generator and amplifier (39 Hz, peak-to-peak amplitude greater than 24 V). The prepregging in chamber 30 was done in a semi-continuous mode i.e. the tow was stationary from time to time to give an effective residence time of 2 minutes in the impregnation chamber. The heater was held at 200°C. In this version of the method, nip rollers were not used. The volume fraction of the matrix was computed to be 51.8 with a standard deviation of 3.9, excluding four runs during which there were problems with fiber motion.

### Example 4

The prepreg tapes were laid up manually in a two-part mold and consolidated under pressure at 195-200°C for 20 minutes each. The resulting specimens were analyzed for volume fraction of fiber under an optical microscope using image analysis techniques. The results are summarized in Table III. The first three samples which were consolidated at 2.414 kilo Pascals (kPa) (350 psi) showed a few voids and a higher standard deviation in volume fraction fiber than the last two samples at 6.034 kPa (875 psi) which were essentially void-free as shown in Figure 4B. The design of optimum consolidation cycles of powder-impregnated prepreg tapes results in the manufacture of void-free composites with a very uniform distribution of fibers across the entire composite.

**TABLE III**

| CONSOLIDATION EXPERIMENTS | | |
|---|---|---|
| SAMPLE # | PRESSURE (psi)/Pa | VOL FRACTION FIBER (%) (STANDARD DEVIATION) |
| 1 | (350) 2,414.10³ | 65.79 (3.91) |
| 2 | (350) 2,414.10³ | 69.79 (1.69) |
| 3 | (350) 2,414.10³ | 70.71 (4.65) |
| 4 | (875) 6,034.10³ | 74.18 (1.16) |
| 5 | (875) 6,034.10³ | 73.48 (1.05) |

There are cost advantages to the present method. First there is little capital investment. The system uses standard acoustic components including speakers 14a and 17b and generators and amplifiers 24 and 25 and standard synchronous drive motors for nip rollers 13, 15 and 22. Little energy is required for operating the system. The power requirements are low.

The method for fixing the polymer particles to the fiber surface in the aerosolizer prior to consolidation is an important component of the method and a variety of methods can be used. Currently the natural charging of the small polymer particles P₁ creates an electrostatic attraction which causes adherence to fibers 10b. Since the charging characteristics of the powders P₁ can vary with their composition, environmental and atmospheric conditions, it is desirable to improve this method or to develop an alternative method for attracting and/or adhering the particles to the fibers 10b.

Imposed electrostatics, preheating of the fibers and the use of fiber coatings as adhesives to hold the particles in position during or after they impact the individual fibers 10b can be used. If a large electrostatic charge is used to attract polymer particles P₁, fluctuations in charge carrying capacity of the powder and atmospheric conditions can be overriden. Alternatively a tubular furnace (not shown) placed at the entrance to the coating chamber 17 can be used to heat the fibers 10b prior to their entry into the coating chamber 17. A combination of thermal input, speed of the fiber tow 10 and heat of fusion of the polymer can provide conditions in which a particle P₁ will locally melt on impact and solidify in position on the fiber 10b. Coatings on the tow 10 can also be used. Common practices from the textile industry are used to apply 100 nanometer thick coatings of a resin onto fibers 10b. If a material which has a melting point below the polymer particle P₁ is used as a coating, it is dry and not tacky at room temperature to allow for handling. The fiber tow could be spread and handled normally. Once spread, the tow 10a can be heated to raise the temperature of the coating to above its melting point prior to entering the coating chamber 17. Impacting powder particles P₁ adhere to this coating within the coating chamber 17 and remain in place.

The fluidization and transport of particles varies with their material properties and size. The acoustic fluidization of particles by size as well as their dispersability within the fiber tow is variable by the method of the present invention. A 10 to 50 mm prepreg 10c was produced in the Examples; however, there is no theoretical limit to the width.

The process is controllable by automated control. Instrumentation for measurement and control of acoustic energy, thermal energy, particle size, flow rates and tow speed can be added to the process. The system can be applied to any powder matrix used for composite materials since material physical properties (density, size, acoustic power, tow speed, etc.) can be used as the input for these control algorithms.

The advantage of this system lies in the ability to make prepreg in which the powder particles are close together and have to flow over only microscopic distances in order to consolidate. Both microwave processing and thermal approaches developed can be used to heat the fibers coated with the particles.

A significant advantage of this system is its application to chopped fibers. The acoustic fluidization can be used to suspend chopped fibers along with the powders. The comingled fiber/powder combination can then be deposited onto a moving surface and can be processed to produce a chopped fiber composite. Chopped fibers can also be provided on a support screen (not shown) and the powder deposited on the fibers as they are conveyed through the chamber 17 or 30. The chopped fiber orientation can also be controlled which results in the ability to make an aligned chopped fiber prepreg. This has significant advantages for making higher strength and stiffness composites with chopped fibers than are obtained with random fiber composites.

Preferably the particles bonded on the fibers represent about 10% to 65% by volume of the fiber volume. Most preferably particle volume is 20 to 40% of the fiber volume.

The prepreg has beads of the polymer from the particles along each fiber or group of fibers. The beads are spaced uniformly on average about 1-1000 µm (1 to 1000 microns) apart along the fiber(s), depending upon the fiber diameter and the particle size.

It is intended that the foregoing description of the present invention be only illustrative and that the present invention be limited only by the hereinafter appended claims.

## Claims

1. A system for coating particles of a material on a fiber (10) which is to be conveyed through the system which comprises:
- chamber means (17) around the fiber (10a) for containing the particles to be deposited on the fiber, having a bottom part and a top part, the bottom part containing a fluidized bed of the particles (P);
- vibrating means (17b) mounted in the bottom part of the chamber means (17) such that the particles (P) are fluidized in said bottom part
**characterized in that**
said chamber means (17) comprises a coating section (17a), located in said top part, wherein aerosolized particles (P1) are present to impact and coat said fiber (10a) that is passed through said coating section (17a) above said fluidized bed.

2. The system of claim 1, wherein said vibrating means is an acoustic speaker means.

3. The system of claim 1 or 2, wherein a gas supply (26) and exhaust means (21) is provided in the chamber means (17) which facilitates fluidization of the particles (P1,P2).

4. The system of claim 1 or 2,
**characterized by further**
comprising:
- feed means (13,15) for feeding the tow of fibers (10);
- spreader means (14) for spreading a tow of fibers (10a) from the feed means; and
- take-up means for the coated tow of fibers.

5. The system of claim 4, wherein a heater means (19) is provided around the tow of fibers to aid in bonding the powder (P,P1) to the coated tow of fibers.

6. The system of claim 5, wherein the heater means (19) is between the take-up means and the chamber means (17).

7. The system of one of claims 2 to 6, wherein the spreader means (14) is a speaker means (14) mounted adjacent to the tow of fibers.

8. The system of claim 3, wherein said chamber means has an inlet and outlet for a gas which aids in fluidizing and dispersing the powder around the tow of fibers.

9. The system of claim 4, wherein pinch rollers are provided adjacent either side of the spread fibers and adjacent to the spreader means.

10. The system of claim 4 or 7, wherein the chamber means (17) has a guide means (16) at an inlet to the housing for the fibers to maintain the spread fibers from the spreader means.

11. The system of claims 4 to 10 as a unitary machine.

12. A method for coating particles on a fiber which comprises:
- providing a system for coating particles (P,P1) of a material on a fiber (10a) comprising chamber means (17) around the fiber (10a) for containing the particles (P,P1) to be deposited on the fiber (10a);
- providing a fluidized bed in said chamber means by fluidizing the particles by vibrating means;
- providing the fiber in the chamber means (17) in the system wherein the fiber is coated with the particles when the vibrating means is activated; and
- activating the vibrating means (17b) to coat the fiber
**characterized by**
passing said fiber (10a) through a coating section (17a) in said chamber means (17) above said fluidized bed, where aerosolized particles (P1) impact and coat said fibers (10a).

13. The method of claim 12, wherein a heater means (19) is provided around the fiber (10a) to aid in bonding the powder to the fiber.

14. The method of claim 12
**characterized by further**
providing spreader means for spreading a tow of fibers to be coated.

15. The method of claim 14, wherein a heater means (19) is provided around the tow of fibers (10a) between take-up means and the chamber means to aid in bonding the powder to the tow of fibers.

16. The method of claim 12 or 14, wherein the spreader means is a speaker means which is mounted adjacent to the tow of fibers and which is activated and spreads the tow of fibers.

17. The method of claim 14, wherein the chamber means has an inlet (26) and outlet (21) for a gas which is fed into the chamber means (17) to aid in fluidizing and dispersing the powder around and coating the tow of fibers.

18. The method of at least one of claims 14 to 17, wherein pinch rollers are provided adjacent either side of the spreading of the tow of fibers and adjacent to the spreader means for maintaining the spread tow of fibers.

19. The method of claim 14 or 18, wherein the chamber means (17) has a guide means (16) at an inlet to the housing which maintains the spread tow of fibers from the spreader means.

20. Use of the method of claim 12 for a preimpregnating method for a laminate product which comprises a tow of fibers (10a) having beads of a thermoplastic polymer along the length of each fiber or group of fibers on the tow of fibers.

21. The use of the method of claim 20, wherein the tow of fibers is composed of carbon.

22. The use of the method of claim 20, wherein the polymer is a polyamide.

23. The use of the method of claim 20, wherein the tow of fibers is composed of carbon.

## Patentansprüche

1. Ein System zum Beschichten einer Faser (10) mit Teilchen aus einem Material, die durch das System zu transportieren ist, das umfaßt:
eine Kammereinrichtung (17) um die Faser (10a) herum, um die Teilchen aufzunehmen, die auf der Faser abzuscheiden sind, wobei sie einen Bodenteil und einen oberen Teil aufweist, und der Bodenteil ein Wirbelbett aus Teilchen (P) enthält;
eine Schwingungsvorrichtung (17b), die in dem Bodenteil der Kammereinrichtung (17) so angebracht ist, daß die Teilchen (B) in dem genannten Bodenteil gewirbelt werden,
**dadurch gekennzeichnet, daß**
die genannte Kammereinrichtung (17) einen Beschichtungsabschnitt (17a) umfaßt, der in dem genannten oberen Teil angeordnet ist, wobei zerstäubte Teilchen (P₁) vorhanden sind, um auf die genannte Faser (10a) aufzutreffen und sie zu beschichten, die durch den genannten Beschichtungsabschnitt (17a) oberhalb des genannten Wirbelbetts bewegt wird.

2. Das System des Anspruchs 1, in dem die genannte Schwingungsvorrichtung eine akustische Lautsprechervorrichtung ist.

3. Das System des Anspruchs 1 oder 2, in dem eine Gaszufuhr (26) und eine Auslaßeinrichtung (21) in der Kammereinrichtung (17) vorgesehen sind, die das Wirbeln der Teilchen (P₁, P₂) erleichtern.

4. Das System des Anspruchs 1 oder 2, **dadurch gekennzeichnet,** daß es ferner umfaßt:
eine Zuführvorrichtung (13, 15) zum Zuführen des Faserstrangs (10);
eine Ausbreitungsvorrichtung (14) zum Ausbreiten eines Strangs von Fasern (10a) von der Zuführvorrichtung; und
eine Aufnahmevorrichtung für den beschichteten Faserstrang.

5. Das System des Anspruchs 4, in dem eine Heizeinrichtung (19) um den Faserstrang herum vorgesehen ist, um das Verbinden des Pulvers (P, P₁) mit dem beschichteten Strang aus Fasern zu unterstützen.

6. Das System des Anspruchs 5, in dem die Heizeinrichtung (19) zwischen der Aufnahmevorrichtung und der Kammereinrichtung (17) ist.

7. Das System nach einem der Ansprüche 2 bis 6, in dem die Ausbreitungsvorrichtung (14) eine Lautsprechervorrichtung (14) ist, die nahe dem Strang aus Fasern angebracht ist.

8. Das System des Anspruchs 3, in dem die genannte Kammereinrichtung einen Einlaß und einen Auslaß für ein Gas hat, das beim Wirbeln und Dispergieren des Pulvers um den Strang aus Fasern herum hilft.

9. Das System des Anspruchs 4, in dem Klemmwalzen nahe jeder Seite der ausgebreiteten Fasern und nahe der Ausbreitungsvorrichtung vorgesehen sind.

10. Das System des Anspruchs 4 oder 7, in dem die Kammereinrichtung (17) eine Führungsvorrichtung (16) an einem Einlaß zu dem Gehäuse für die Fasern hat, um die ausgebreiteten Fasern von der Ausbreitungsvorrichtung beizubehalten.

11. Das System des Anspruchs 4 bis 10, als eine einheitliche Maschine.

12. Ein Verfahren zum Beschichten einer Faser mit Teilchen, das umfaßt:
Bereitstellen eines Systems zum Beschichten einer Faser (10a) mit Teilchen (P, P1) aus einem Material, das umfaßt eine Kammereinrichtung (17) um die Faser (10a) herum zum Aufnehmen der Teilchen (P, P1), die auf der Faser abgeschieden werden sollen;
Bereitstellen eines Wirbelbetts in der genannten Kammereinrichtung, durch Wirbeln der Teilchen durch eine Schwingungsvorrichtung;
Bereitstellen der Faser in der Kammereinrichtung (17) in dem System, in der die Faser mit den Teilchen beschichtet wird, wenn die Schwingungsvorrichtung aktiviert wird; und
Aktivieren der Schwingungsvorrichtung (17b), um die Faser zu beschichten,
**gekennzeichnet durch**
Hundurchbewegen der genannten Faser (10a) durch einen Beschichtungsabschnitt (17a) in der genannten Kammereinrichtung (17) oberhalb des genannten Wirbelbetts, wo zerstäubte Teilchen (P1) auf die genannten Fasern (10a) auftreffen und sie beschichten.

13. Das Verfahren des Anspruchs 12, in dem eine Heizeinrichtung (19) um die Faser (10a) herum vorgesehen wird, um das Verbinden des Pulvers mit der Faser zu unterstützen.

14. Das Verfahren des Anspruchs 12, **dadurch gekennzeichnet,** daß es ferner umfaßt, eine Ausbreitungsvorrichtung zum Ausbreiten eines Strangs von Fasern vorzusehen, die beschichtet werden sollen.

15. Das Verfahren des Anspruchs 14, in dem eine Heizeinrichtung (19) um den Strang aus Fasern (10a) zwischen der Aufnahemvorrichtung und der Kammereinrichtung vorgesehen wird, um das Verbinden des Pulvers mit dem Strang von Fasern zu unterstützen.

16. Das Verfahren des Anspruchs 12 oder 14, in dem die Ausbreitungsvorrichtung eine Lautsprechervorrichtung ist, die nahe dem Strang von Fasern angeordnet ist und die aktiviert wird und den Strang von Fasern ausbreitet.

17. Das Verfahren des Anspruchs 14, in dem die Kammereinrichtung einen Einlaß (26) und einen Auslaß (21) für ein Gas hat, das in die Kammereinrichtung (17) eingebracht wird, um beim Wirbeln und Dispergieren des Pulvers um den Strang aus Fasern herum und dessen Beschichten zu unterstützen.

18. Das Verfahren nach mindestens einem der Ansprüche 14 bis 17, in dem Klemmwalzen nahe beider Seiten der Ausbreitung des Strangs aus Fasern und nahe der Ausbreitungsvorrichtung vorgesehen sind, um den ausgebreiteten Faserstrang beizubehalten.

19. Das Verfahren des Anspruchs 14 oder 18, in dem die Kammereinrichtung (17) eine Führungseinrichtung (16) an einem Einlaß zu dem Gehäuse hat, die den ausgebreiteten Faserstrang von der Ausbreitungsvorrichtung beibehält.

20. Verwendung des Verfahrens des Anspruchs 12 für ein Vorimprägnierungsverfahren für ein Schichtprodukt, das einen Strang aus Fasern (10a) umfaßt, die Kugeln aus einem thermoplastischen Polymer entlang der Länge jeder Faser oder Gruppe von Fasern bei dem Faserstrang aufweisen.

21. Die Verwendung des Verfahrens des Anspruchs 20, bei der der Faserstrang aus Kohlenstoff zusammengesetzt ist.

22. Die Verwendung des Verfahrens des Anspruchs 20, bei der das Polymer ein Polyamid ist.

23. Die Verwendung des Verfahrens des Anspruchs 20, bei der der Faserstrang aus Kohlenstoff gebildet ist.

## Revendications

1. Système pour le revêtement de particules d'une matière sur une fibre (10), ce revêtement devant être mis en oeuvre par l'intermédiaire du système qui comporte:
· des moyens avec chambre (17) autour de la fibre (10a) pour contenir les particules devant être deposées sur la fibre, ayant une partie inférieure et une partie supérieure, la partie inférieure contenant un lit fluidisé de particules (P) ;
· des moyens de vibration (17b) montés dans la partie inférieure des moyens avec chambre (17), de telle sorte que les particules (P) sont fluidisées dans ladite partie inférieure,
le système étant caractérisé en ce que
· lesdits moyens avec chambre (17) comportent une section de revêtement (17a), située dans ladite partie supérieure, où les particules mises sous forme d'aérosol (P1) sont présentes pour heurter et revêtir ladite fibre (10a) que l'on fait passer à travers ladite section de revêtement (17a) au-dessus dudit lit fluidisé.

2. Système selon la revendication 1, où lesdits moyens de vibration sont des moyens avec un haut-parleur accoustique.

3. Système selon la revendication 1 ou 2, où des moyens avec entrée de gaz (26) et sortie de gaz (21) sont disposés dans les moyens avec chambre (17) et facilitent la fiuidisation des particules (P1, P2).

4. Système selon la revendication 1 ou 2, caractérisé en ce qu'il comporte en outre :
· des moyens d'introduction (13, 15) pour introduire le faisceau de fibres (10) ;
· des moyens avec écarteur (14) pour écarter un faisceau de fibres (10a) à partir des moyens d'introduction ; et
· des moyens de reprise pour le faisceau de fibres revêtu.

5. Système selon la revendication 4 où des moyens avec dispositif de chauffage (19) sont présents autour du faisceau de fibres pour faciliter l'adhésion de la poudre (P, P1) au faisceau de fibres revètu.

6. Système selon la revendication 5, où les moyens avec dispositif de chauffage (19) se trouvent entre les moyens de reprise et les moyens avec chambre (17).

7. Système selon l'une des revendications 2 à 6, où les moyens avec écarteur (14) sont des moyens avec haut-parleur (14) montés de façon adjacente au faisceau de fibres.

8. Système selon la revendication 3, où lesdits moyens avec chambre comportent une entrée et une sortie pour un gaz qui facilite la fluidisation et la dispersion de la poudre autour du faisceau de fibres.

9. Système selon la revendication 4, où des rouleaux de serrage sont présents adjacents à chaque côté des fibres écartées et adjacents aux moyens avec écarteur.

10. Système selon la revendication 4 ou 7, où les moyens avec chambre (17) ont des moyens avec guide (16) à une entrée de l'enceinte pour les fibres pour maintenir les fibres écartées à partir des moyens avec écarteur.

11. Système selon les revendications 4 à 10, sous forme d'une machine unique.

12. Procédé pour appliquer des particules sur une fibre qui comporte :
· l'utilisation d'un système pour appliquer des particules (P, P1) d'une matière sur une fibre (10a) comportant des moyens avec chambre (17) autour de la fibre (10a) pour contenir les particules (P, P1) devant être déposées sur la fibre (10a) ;
· l'utilisation d'un lit fluidisé dans lesdits moyens avec chambre en fluidisant les particules par des moyens de vibration ;
· l'utilisation de la fibre dans les moyens avec chambre (17) dans le système où la fibre est revêtue avec les particules lorsque les moyens de vibration sont activés ; et
· l'activation des moyens de vibration (17b) pour recouvrir la fibre,
le procédé étant caractérisé en ce que
· on fait passer ladite fibre (10a) à travers une section de revêtement (17a) dans lesdits moyens avec chambre (17) au-dessus dudit lit fluidisé où les particules sous forme d'aérosol (P1) heurtent et revêtent lesdites fibres (10a).

13. Procédé selon la revendication 12, où des moyens avec dispositif de chauffage (19) sont présents autour de la fibre (10a) pour faciliter l'adhésion de la poudre à la fibre.

14. Procédé selon la revendication 12, caractérisé en outre par le fait que l'on utilise des moyens avec écarteur pour écarter un faisceau de fibres à revêtir.

15. Procédé selon la revendication 14, où des moyens avec dispositif de chauffage (19) sont utilisés autour du faisceau de fibres (10a) entre les moyens de reprise et les moyens avec chambre pour faciliter l'adhésion de la poudre au faisceau de fibres.

16. Procédé selon la revendication 12 ou 14, où les moyens avec écarteur sont des moyens avec un haut-parleur qui est monté de façon adjacente au faisceau de fibres et qui est activé et qui écarte le faisceau de fibres.

17. Procédé selon la revendication 14, où les moyens avec chambre comportent une entrée (26) et une sortie (21) pour un gaz qui est introduit dans les moyens avec chambre (17) pour faciliter la fluidisation et la dispersion de la poudre autour du faisceau de fibres et pour le revêtir.

18. Procédé selon au moins une des revendications 14 à 17, où des rouleaux de serrage sont utilisés de façon adjacente à chaque côté de l'écartement du faisceau de fibres et de façon adjacente aux moyens avec écarteur pour maintenir le faisceau écarté de fibres.

19. Procédé selon la revendication 14 ou 18, où les moyens avec chambre (17) ont des moyens avec guide (16) à une entrée de l'enceinte qui maintiennent le faisceau écarté de fibres depuis les moyens avec écarteur.

20. Emploi du procédé selon la revendication 12 pour un procédé de préimprégnation pour un produit stratifié qui comporte un faisceau de fibres (10a) ayant des billes d'un polymère thermoplastique sur la longueur de chaque fibre ou de chaque groupe de fibres sur le faisceau de fibres.

21. Emploi du procédé de la revendication 20, où le faisceau de fibres est composé de carbone.

22. Emploi du procédé selon la revendication 20, où le polymère est un polyamide.

23. Emploi du procédé selon la revendication 20, où le faisceau de fibres est composé de carbone.
